# EUROPEAN PATENT SPECIFICATION

(11) **EP 3 503 381 B1**
(45) Date of publication and mention of the grant of the patent: **26.10.2022**
(21) Application number: 17382889.8
(22) Date of filing: 22.12.2017
(51) Int. Cl.: H02P 9/10, H02J 3/00, H02P 9/00, H02J 3/50, H02J 11/00, H02J 3/38

(54) **METHODS FOR PROVIDING ELECTRICAL POWER TO WIND TURBINE COMPONENTS**
VERFAHREN ZUR BEREITSTELLUNG ELEKTRISCHER ENERGIE FÜR WINDTURBINENKOMPONENTEN
PROCÉDÉ D'ALIMENTATION ÉLECTRIQUE POUR COMPOSANTS D'ÉOLIENNE

(43) Date of publication of application: 26.06.2019
(73) Proprietor: GE Renewable Technologies Wind B.V., 4817 PA Breda (NL)
(72) Inventor: Schoenleber, Kevin, 08005 Barcelona (ES)
(74) Representative: de Rooij, Mathieu Julien

(56) References cited:
- US-A1- 2015 073 610
- US-A1- 2016 273 520
- KE MA ET AL: "Reactive Power Influence on the Thermal Cycling of Multi-MW Wind Power Inverter", IEEE TRANSACTIONS ON INDUSTRY APPLICATIONS, IEEE SERVICE CENTER, PISCATAWAY, NJ, US, vol. 49, no. 2, 1 March 2013 (2013-03-01), pages 922-930, XP011497121, ISSN: 0093-9994, DOI: 10.1109/TIA.2013.2240644

## Description

The present disclosure relates to methods for providing electrical power to wind turbine components, in particular when the electrical grid does not provide electrical power.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

Wind turbines can use a variable speed operation such that the speed of the blades changes with changes in wind speed. However, as the speed of the turbine fluctuates, the frequency of alternating current flowing from the generator also fluctuates. Accordingly, variable speed turbine configurations can also include power converters that may be used to convert a frequency of generated electrical power to a frequency substantially similar to a utility grid frequency. Such power converters can typically comprise an AC-DC-AC topology with a regulated DC link, and can be controlled by a converter controller.

Wind turbines may be arranged together forming a wind park, with a single point of connection to the electrical grid, i.e. the PCC ("Point of Common Coupling"). Wind parks may comprise a substation including e.g. wind park transformers that convert power from the wind park voltage to a grid voltage. Such a substation may further include wind park control systems e.g. a supervisory control and data acquisition system (SCADA).

Wind parks may be arranged on land ("onshore"), or in the water ("offshore"), either as a plurality of floating wind turbines or with wind turbines on pillars fixed in the sea bed.

In wind turbines, there are electrical components which are required to operate continuously, even during stand-by situations. These components may include components related to air conditioning systems, sensors, PLCs, beacons and protective systems among others.

There are also components which are less critical. These components may be required to operate only occasionally during stand-by situations. These components may include lubrication pumps, lighting systems, the service lift, pitch and yaw systems among others.

In summary, power supply must always be available for at least some of the electrical components forming part of a wind turbine. And for some other electrical components, power supply may need to be ensured intermittently.

However, connection with the grid may be lost during planned maintenance, or during installation, but also during normal operation in case of a problem in the grid. Additionally, sometimes the wind turbine has to be stopped for an inspection and the connection of the transformer to the grid has to be cut. Wind turbines that are disconnected from the medium voltage or high voltage collector system for repair or maintenance work may not provide electrical power or at least suitable electrical power to feed the electrical components. In these cases one or more auxiliary power sources have to be provided for most of the electrical components.

For example, a plurality of auxiliary power generators e.g. diesel generators may be installed at individual wind turbines to be able to supply power to each wind turbine individually. Or alternatively, at least one more powerful auxiliary power generator may be provided at the central substation supplying all wind turbines simultaneously.

KE MA ET AL: "Reactive power influence on the Thermal Cycling of Multi-MW Wind Power Inverter" discloses the reactive power influence on the thermal cycling of power devices.

US 2016/273520 describes a method for controlling at least one wind turbine, wherein the at least one wind turbine is set up to feed electrical power into an electrical power grid.

US 2015/073610 discloses an electric power system for a wind turbine which includes at least one auxiliary load bus configured to transmit electric power to auxiliary equipment.

### SUMMARY

In a first aspect, a method for providing electrical power to one or more components of a wind turbine is provided according to the independent claim 1.

According to this aspect, a method for providing electrical power to one or more wind turbine components is provided in which electrical power supply to the electrical components of the wind turbine can be maintained and controlled, even when no power is delivered from an electrical grid.

Such operation is performed by providing electrical power to the electrical components of the wind turbine by the wind turbine generator (if e.g. there is wind and the wind turbine is generating electrical power). In this respect, reactive power is circulated among the power converters i.e. one or more power converters are operated to generate reactive power and one or more power converters are operated to absorb reactive power. The purpose of this operation is to increase the converters current and therefore to increase the power losses of the power conversion stage. With such an operation, the wind turbine may operate at a certain wind speed with its conventional power curve but having higher internal losses. The electrical power delivered by the generator i.e. the active power output of the generator may thus be reduced (relatively quickly) without acting on the own generator. Additionally, neither the wind turbine generator nor the grid will notice this internal reactive power exchange.

In summary, particularly when the electrical grid does not provide electrical power, the converters are used for lowering i.e. offsetting a relatively high power supplied by the wind turbine generator such that a suitable electrical power is fed to the electrical components of the wind turbine.

### BRIEF DESCRIPTION OF THE DRAWINGS

Non-limiting examples of the present disclosure will be described in the following, with reference to the appended drawings, in which:
Figure 1 illustrates a perspective view of one example of a wind turbine;
Figure 2 illustrates a simplified, internal view of one example of the nacelle of the wind turbine of the Figure 1;
Figure 3 schematically illustrates an example of a system for providing electrical power to one or more wind turbine components;
Figure 4 illustrates an example of a machine side converter and a grid side converter forming part of a power converter which may be used in examples of the method according to the present disclosure;
Figure 5 illustrates an example of a wind power system comprising a doubly fed induction generator (DFIG) which may be used in examples of the methods according to the present disclosure;
Figure 6 is an illustration of a block diagram describing an example of a method for providing electrical power to one or more wind turbine components.

### DETAILED DESCRIPTION OF EXAMPLES

Throughout the present description and claims "generating reactive power" is considered to be an increase in capacitive power (or a decrease in inductive reactive power). Additionally, "absorbing reactive power" is considered to be an increase in inductive reactive power (or a decrease in capacitive reactive power).

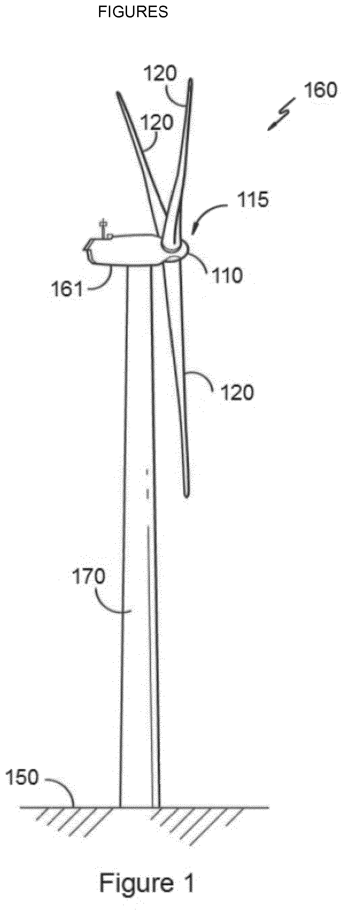

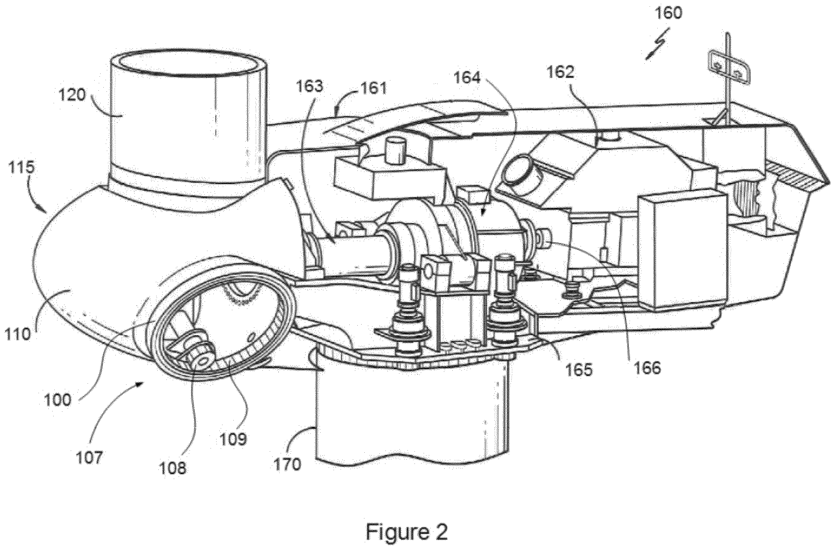

Figure 1 illustrates a perspective view of one example of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. For example, in the illustrated embodiment, the rotor 115 includes three rotor blades 120. However, in an alternative embodiment, the rotor 115 may include more or less than three rotor blades 120. Each rotor blade 120 may be spaced about the hub 110 to facilitate rotating the rotor 115 to enable kinetic energy to be transferred from the wind into usable mechanical energy, and subsequently, electrical energy. For instance, the hub 110 may be rotatably coupled to an electric generator 162 (Figure 2) positioned within the nacelle 161 to permit electrical energy to be produced.

Figure 2 illustrates a simplified, internal view of one example of the nacelle 161 of the wind turbine 160 of the Figure 1. As shown, the generator 162 may be disposed within the nacelle 161. In general, the generator 162 may be coupled to the rotor 115 of the wind turbine 160 for generating electrical power from the rotational energy generated by the rotor 115. For example, the rotor 115 may include a main rotor shaft 163 coupled to the hub 110 for rotation therewith. The generator 162 may then be coupled to the rotor shaft 163 such that rotation of the rotor shaft 163 drives the generator 162. For instance, in the illustrated embodiment, the generator 162 includes a generator shaft 166 rotatably coupled to the rotor shaft 163 through a gearbox 164.

It should be appreciated that the rotor shaft 163, gearbox 164, and generator 162 may generally be supported within the nacelle 161 by a support frame or bedplate 165 positioned atop the wind turbine tower 170.

Blades 120 are coupled to the hub 110 with a pitch bearing 100 in between the blade 120 and the hub 110. The pitch bearing 100 comprises an inner ring and an outer ring. A wind turbine blade may be attached either at the inner bearing ring or at the outer bearing ring, whereas the hub is connected at the other. A blade 120 may perform a relative rotational movement with respect to the hub 110 when a pitch system 107 is actuated. The inner bearing ring may therefore perform a rotational movement with respect to the outer bearing ring. The pitch system 107 of Figure 2 comprises a pinion 108 that mesh with an annular gear 109 provided on the inner bearing ring to set the wind turbine blade into rotation.

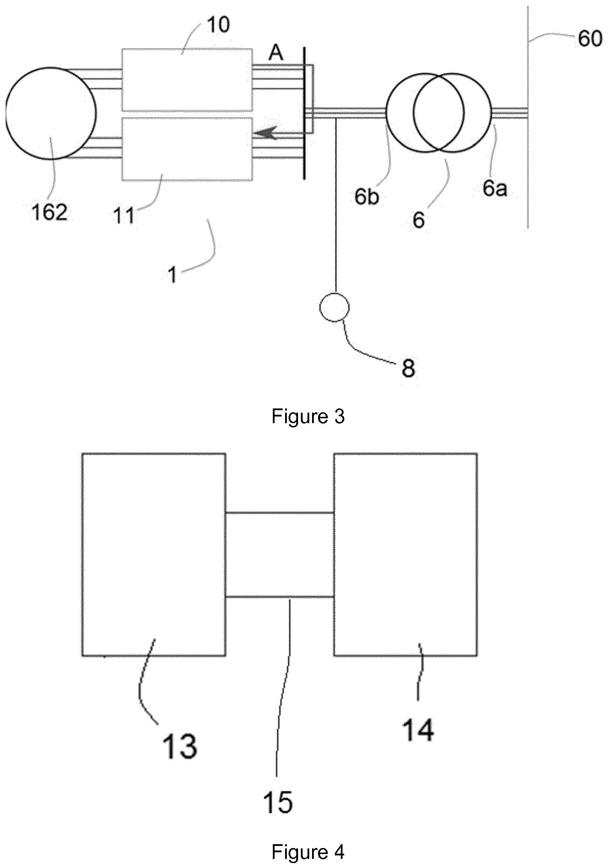

Figure 3 schematically illustrates an example of a system for providing electrical power to one or more wind turbine components. Figure 3 shows a wind turbine system 1 e.g. an offshore wind turbine system comprising a main transformer 6 including a primary winding 6a and a secondary winding 6b. Although transformer 6 depicts a two winding transformer, other suitable transformers may be used, such as a three-winding transformer.

The primary winding 6a of the main transformer 6 may be connected to a busbar 60. The busbar 60 may further be connected to an electrical grid (not shown) e.g. a transformer of a substation connecting an offshore wind park to a high voltage transmission line (either High Voltage DC or High Voltage AC). The electrical grid is configured to provide electrical power to the busbar with a main voltage e.g. in normal operation.

The secondary winding 6b of the main transformer may be connected to a first converter 10 and a second converter 11 via a point of connection to the main transformer. In this example, two parallel converters 10, 11 may be provided. In some other examples, more than two parallel converters may also be possible. In examples, a harmonic filter may be connected to the transformer. In alternative examples, a filter-less configuration i.e. a configuration without a harmonic filter connected to the transformer may be provided.

The system 1 further comprises the wind turbine generator 162. In this example, the wind turbine generator 162 may be a synchronous generator e.g. a permanent magnets generator.

As shown in figure 4, the converter 10 of figure 3 may comprise a machine-side converter 13 e.g. an AC-DC converter and a grid-side converter 14 e.g. a DC-AC converter. The machine-side converter 13 may be electrically connected to the generator. Moreover, the grid-side converter 14 may be electrically coupled a point of connection of the secondary winding of the main transformer. The machine side converter 13 and the grid side converter 14 are configured for normal operating mode in a three-phase, pulse width modulation (PWM) arrangement using e.g. insulated gate bipolar transistors (IGBT) switching elements. Machine side converter 13 and grid side converter 14 may be coupled via a DC link 15. The structure and operation of the converter 11 may the same or similar to the converter 10.

Following the example, in normal operation, the electric power generated by the generator is rectified by the machine-side converter 13 and converted by the grid-side converter 14 to an AC power which is transformed by the transformer and is fed into the grid with a power line.

Again in figure 3, operation of the wind turbine may be controlled by a wind turbine control system. The wind turbine control system may be incorporated in a larger general control system (e.g. at wind farm level) or may be a dedicated stand-alone control system. Lines of communication may be provided between the control system and components of the wind turbine e.g. the generator 162, the converters 10, 11 or a wind turbine pitch. Data may thus be interchanged and the control unit may send commands (and thus communicate) to e.g. the corresponding generator 162 and converters 10, 11. Additionally, data from the generator and converter (currents, voltages) may be collected by the control system. Based on the data collected, the control system may give commands to control the wind turbine and at least some of its components e.g. the converters.

The control system may include any piece or pieces of hardware or software, such as computers and computer programs and suitable circuits to control the wind turbine and its components. For example, the converters 10, 11 may be able to communicate their functioning to the control system. By controlling the converters 10, 11, the control system may be able to control the operation of the converters in order to e.g. generate and / or absorb reactive power.

In normal operation i.e. when the grid supplies electrical power, the electrical grid is configured to provide electrical power to the busbar 60 with a main voltage of e.g. 66kV. The main transformer 6 may thus convert power from e.g. 66 kV as delivered from the grid to e.g. 3.3 kV. An auxiliary wind turbine transformer (not shown) will further transform the power from 3.3 kV to the voltage level required by the electrical components 8 of the wind turbine, such as e.g. lighting systems, pitch systems, pumps, cooling fans, etc. In examples, the auxiliary transformer may be connected to the busbar 60 and thus the auxiliary transformer is arranged to receive 66 kV as delivered from the grid.

In different circumstances e.g. in case of a grid loss, a control may be aimed at reducing the electrical power generated by the wind turbine, since the electrical power cannot be injected into the grid. A reduction of electrical power may be achieved e.g. by suitable pitching the wind turbine blades and/or controlling the generator. Alternatively or additionally, a control signal that orders the converter 10 to generate reactive power may be generated by the control system e.g. at the level of the supervisory control and data acquisition system (SCADA) and it may be sent to the converter 10. The grid side converter 14 (see figure 4) of the converter 10 may thus inject / generate reactive power in the direction of the arrow (arrow A). With such an arrangement, the electrical power delivered by the wind turbine generator may be reduced. The control over the converter can achieve the effect of reducing the active power more quickly than a control over pitch and/or generator.

Following the example, a further control signal that orders the converter 11 to absorb reactive power may be generated by the control system e.g. again at the level of the supervisory control and data acquisition system (SCADA). The grid side converter of the converter 11 (which is not generating reactive power) may thus absorb the reactive power generated by the converter 10 in the direction of the arrow (arrow A). It is noted that neither the wind turbine generator 162 nor the grid 60 will notice this internal reactive power exchange. It is further noted that the amount of reactive power absorbed by the converter 11 may be similar to an amount of reactive power generated by the power converter 10.

Moreover, the converter may be provided with a cooling system. The cooling system of the converters may additionally be activated such that the electrical power delivered to the electrical components 8 of the wind turbine is further reduced because electrical power is used by the cooling system.

In examples, the reduced electrical power delivered by the generator may still be too high to properly feed the electrical components 8. In this case, a device configured to absorb power may be activated.

An auxiliary wind turbine transformer (not shown) will further transform the lowered voltage to the voltage level required by the electrical components 8 of the wind turbine, such as e.g. lighting systems, pitch systems, pumps, cooling fans, etc. This voltage level may be 0.4 kV.

The wind turbine may thus operate in a "self-sustaining mode of operation", namely the wind turbine itself generates a suitable electrical power to feed the electrical components of the wind turbine even when no power is supplied by the electrical grid. Following the example, a further control signal that orders the converter 11 to absorb reactive power may be generated by the control system e.g. again at the level of the supervisory control and data acquisition system (SCADA). The grid side converter of the converter 11 (which is not generating reactive power) may thus absorb the reactive power generated by the converter 10 in the direction of the arrow (arrow A). It is noted that neither the wind turbine generator 162 nor the grid 60 will notice this internal reactive power exchange. It is further noted that the amount of reactive power absorbed by the converter 11 is similar to an amount of reactive power generated by the power converter 10.

If the wind turbine control system detects that the grid has recovered, the turbine controller adapts the grid voltage, by means of the main transformer and the auxiliary transformer, to the wind turbine components voltage and can stop the generation of reactive power to change over to normal operation.

It is noted that the operation to generate / absorb reactive power as hereinbefore described in a wind turbine comprising a synchronous generator e.g. a permanent magnets generator may be performed using two or more converters. The reasoning is that in a synchronous generator configuration, the grid side converter is only connected to the machine side converter via the DC-link. In this respect, no reactive power can be exchanged between the grid side converter and the machine side converter forming part of the power converter using such DC link (and thus no exchange of reactive power can be performed among the grid side converter and the machine side converter using a single converter).

In examples, a measurement upon which the control system may base its instructions to operate the converters may be the electrical power delivered to the electrical components. The electrical power delivered to the electrical components may be measured or determined by the control system. The control system may thus calculate instructions to be sent to the power converters 10, 11. Particularly, the collected electrical power delivered to the electrical components is compared with a suitable electrical power for the electrical components. For example, if the electrical power delivered by the generator is above the suitable electrical power for the electrical components, the control system may send reactive power commands to operate the generation of reactive power by the converter 10 (and thus to reduce the electrical power i.e. the active power generated by the generator). Additionally, the control unit may send reactive power commands to the converter 11 in order to absorb reactive power by the converter 11, namely the reactive power generated by the converter 10.

The control unit may also determine the amount of reactive power to be generated in accordance with one or more measured variables of the wind turbine. The measured variables may be the electric power received by the electrical components and / or the electrical power generated by the generator.

In examples, instead of determining the amount of reactive power to be generated, the control unit may simply send signals to the converter 10 to generate the maximum possible reactive power that the converter can generate.

The number of power converters may be an even number of power converters. In some cases, half of the power converters may then be set to generate reactive power and the other half of power converters may be set to absorb reactive power. The performance of the converters in order to generate / absorb reactive power may thus be balanced among the power converters.

In examples, the wind turbine may comprise three or more parallel converters defining a plurality of n converters. X converters may be set such that the x selected converters do not generate reactive power. Therefore, n - x power converters may be selected and set to generate and absorb reactive power. For example, in case of a system comprising three power converters, a power converter may generate reactive power and another power converter may absorb reactive power as hereinbefore described. The remaining power converter may simply operate in normal operation i.e. the converter does not generate or absorb reactive power.

The control unit for the wind park may further be adapted to include algorithms for taking the wind turbine out of operation if e.g. the wind turbine does not follow the commands of the control unit or if the wind turbine is unable to deliver the prescribed reactive power values, or e.g. if communication failures are noted etc.

The system 1 in this example may further comprise an auxiliary power source e.g. a diesel generator (not shown). The auxiliary power source may also be provided at the above-commented substation. Any kind of auxiliary power source may be used, but diesel generators are the most common. In some examples, a single auxiliary power source may be sufficient to supply power to all wind turbines during standby situations. The single auxiliary power source may be arranged at an offshore substation in case of an offshore wind park. In another example, a plurality of auxiliary power sources may be arranged at the electrical grid or at the offshore substation. An auxiliary power source may be provided for cases of emergency, e.g. there is no wind for the wind turbine to operate, and no power provided from the grid.

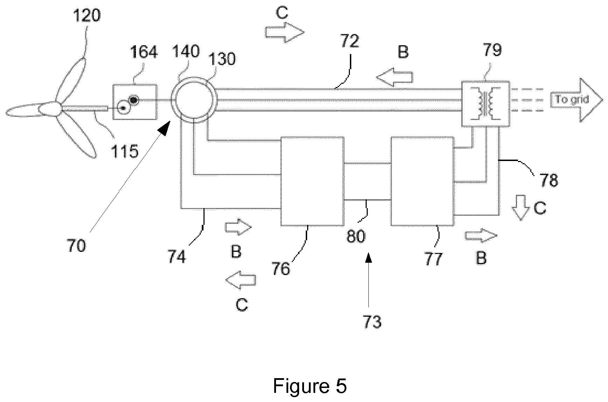

Figure 5 illustrates an example of a wind power system comprising a doubly fed induction generator (DFIG) used in examples of the methods according to the present disclosure. The system includes rotor blades 120. The system may comprise a gearbox 164 connected to the turbine rotor 115 of the blades 120. The gearbox converts the relatively low speed of the wind turbine rotor to the relatively high speed of a rotor of the generator 70.

The generator 70 converts the mechanical power into electrical power. In this example, the generator is a doubly fed induction generator (DFIG) including a rotor winding 130 and a stator winding 140.

DFIG 70 is typically coupled to a stator bus 72 and a power converter 73 via a rotor bus 74. Stator bus 72 provides an output multiphase power (e.g. three-phase power) from the stator 140 of DFIG and the rotor bus 74 provides an output multiphase power (e.g. three-phase power) from a rotor 130 of DFIG. The wind turbine may further be coupled to a control unit to control the operation of some of the components of the wind turbine e.g. DFIG 70 or the wind turbine converters. The control unit may be the same (or similar) as hereinbefore described.

Following the example, DFIG 70 is coupled via rotor bus 74 to a rotor side converter 76. Rotor side converter 76 is coupled to a grid side converter 77, which, in turn, is coupled to a line side bus 78. In examples, rotor side converter 76 and grid side converter 77 are configured for normal operating mode in a three-phase, pulse width modulation (PWM) arrangement using insulated gate bipolar transistors (IGBT) switching elements. Rotor side converter 76 and grid side converter 77 may be coupled via a DC link 80.

As commented above, power converter 73 may also be coupled to the control system of the wind turbine to control the operation of rotor side converter and grid side converter. In examples, instructions stored in control system, when executed by a processing device, can cause the processing device to perform operations, including providing control commands (e.g. generate / absorb reactive power) to the power converter 73, particularly to the grid side converter and the rotor side converter.

Transformer 79 depicts a two winding transformer, although other suitable transformers may be used, such as a three-winding transformer. The transformer may be connected to the grid side converter via line bus 78 and to the DFIG's stator via stator bus 72. A primary winding of the transformer may further be connected to the grid. In examples using a three-winding transformer, the line bus 78 may be coupled to one winding of the transformer, the stator bus 72 may be coupled to another winding of the transformer, and the grid may be coupled to another winding of the transformer.

In operation, alternating current power generated at DFIG 70 by rotating rotor 130 is provided via a dual path to electrical grid. The dual path is defined by stator bus 72 and rotor bus 74. On the rotor bus side, sinusoidal multi-phase (e.g. three-phase) alternating current (AC) power may be provided to power converter 73. Rotor side power converter 76 may convert the AC power provided from rotor bus 74 into direct current (DC) power and provides the DC power to DC link 80. Switching elements (e.g. IGBTs) used in parallel bridge circuits of rotor side power converter 76 can be modulated to convert the AC power provided from rotor bus 74 into DC power suitable for DC link 80.

Grid side converter 77 may convert the DC power on DC link 80 into AC output power suitable for electrical grid. In particular, switching elements (e.g. IGBTs) used in bridge circuits of grid side power converter 77 may be modulated to convert the DC power on DC link 80 into AC power on line side bus 78. The AC power from power converter 73 may be combined with the power from the stator of DFIG 70 to provide multi-phase power (e.g. three-phase power) i.e. active power having a frequency maintained substantially at the frequency of electrical grid (e.g. 50 Hz/60 Hz).

Various circuit breakers and switches (not shown) can be included in the system to connect or disconnect corresponding buses, for example, when current flow is excessive and can damage components of wind turbine system or for other operational considerations. Additional protection components can also be included in wind turbine system.

In different circumstances e.g. in case of a grid loss, a control signal that orders the converter 73 to generate reactive power may be generated by the control system (at the level of the supervisory control and data acquisition system (SCADA) of a wind park or a wind turbine) and it may be sent to the converter 73. As a result, the grid side converter 77 of the converter 73 may inject / generate reactive power in the direction of the arrow (arrow B).

Following the example, a further control signal that orders the same converter 73 to absorb reactive power may be generated at the level of the above-commented supervisory control and data acquisition system (SCADA). The rotor side converter 76 of the converter 73 may thus absorb the reactive power generated by the grid side converter 77 in the direction of the arrow (arrow B). Specifically, the stator absorbs the generated reactive power and the rotor side converter is used to orientate the generator suitably.

The electrical power delivered by the generator may thus be reduced due to an increase of electrical losses.

Following the example, a further control signal that orders the same converter 73 to absorb reactive power may be generated at the level of the above-commented supervisory control and data acquisition system (SCADA). The rotor side converter 76 of the converter 73 may thus absorb the reactive power generated by the grid side converter 77 in the direction of the arrow (arrow B).

In alternative examples, the rotor side converter 76 may generate electrical power in the direction of the arrow (arrow C) and the grid side converter 77 may absorb the generated reactive power.

It is noted that, in a DFIG configuration, the grid side converter 77 and the rotor side converter 76 are connected via the transformer 79 and / or the generator 70. It is thus clear that reactive power can be exchanged between the grid side converter and rotor side converter forming part of a single converter 73 in order to increase the power losses of the power conversion stage. Similarly as before, neither the wind turbine generator nor the grid will notice this internal reactive power exchange.

In some other examples, two or more parallel power converters may be used (instead of a single converter) with a DFIG configuration. The operation of the converters in order to generate / reduce reactive power including two or more parallel converters may be the same or similar to the operation described in previous examples.

In examples, systems as hereinbefore described may also be used at any situation wherein the wind turbine system is requested to reduce active power generation. For example, for fine adjustment of power tracking or very fast power de-rating (instantaneous reduction of power output by up to 1%), which might be a future grid code requirement.

In this respect, in a further aspect, a method for providing electrical power to an electrical grid is provided. The method comprises reducing active electrical power delivered to the grid by operating one or more power converters to generate reactive power and, operating one or more power converters to absorb the generated reactive power.

In normal operation, the electrical power generated by the generator is transformed by the main transformer and is fed into the grid with a power line.

In different circumstances, e.g. in case of a request from a grid operator to reduce active power output, a control may be aimed at reducing the electrical power delivered by the wind turbine to the grid. Similarly as before, a control signal that orders the converter to generate (an additional amount of) reactive power may be generated by the control system e.g. at the level of the supervisory control and data acquisition system (SCADA) and it may be sent to the converters. The converters may thus be operated to inject / generate reactive power.

A further control signal that orders the converters to absorb (the same additional amount of) reactive power may be generated by the control system e.g. again at the level of the supervisory control and data acquisition system (SCADA). The converters may thus be operated to absorb the reactive power generated. With such an arrangement, the active electrical power delivered to the grid may be reduced in response to a request (from a grid operator) to reduce the active power output. Moreover, the control over the converter can achieve such effect of reducing the active power delivered to the grid in a relatively quick manner.

Methods for reducing active power delivered to the grid may be carried out in the same ways and with the same generator-converter topologies as explained for the methods of controlling active power delivered to wind turbine components directly from the wind turbine generator.

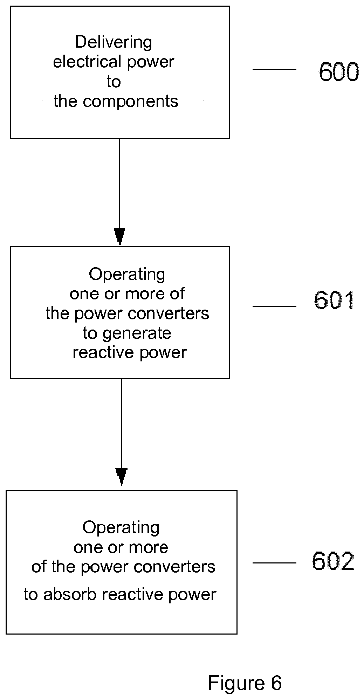

Figure 6 is an illustration of a block diagram describing an example of a method for providing electrical power to one or more wind turbine components.

A system for providing electrical power to one or more wind turbine components may be provided. Particularly, the system may comprise a wind turbine comprising a generator, a rotor hub with a plurality of rotor blades, the hub being configured to drive a rotor of the wind turbine generator. The system may further comprise a main transformer for connecting the wind turbine generator to a grid, and one or more power converters arranged between the generator and a point of connection to the main transformer, wherein each of the converters comprises a grid side converter electrically coupled to the transformer and a machine side converter electrically coupled to the generator.

At block 600, electrical power may be delivered to the electrical components of the wind turbine by the wind turbine generator. This operation can be performed e.g. in case a drop in the electrical power supplied from the electrical grid is detected. This may involve that the connection with the grid may be lost e.g. during planned maintenance or during normal operation in case of a problem in the grid.

In some examples, detecting the drop in power supply comprises detecting a drop in power supply by a voltmeter.

The voltmeter may be used to detect electrical power supply from the grid, i.e. as long as a voltage is present, electrical power is supplied by the grid. In alternative arrangements, some other device suitable for detecting the presence of power supply in the electrical grid may be used.

In some examples, in order to detect the drop in the electrical power supplied from the electrical grid, the voltage drop may be sustained during e.g. 30 minutes or 1 hour. Additionally, the detection of the drop in the electrical power may be supported by an additional signal by the offshore substation that e.g. a grid loss is occurring.

Detection of a drop in power supply may be done at a central level, e.g. at a SCADA of an individual wind turbine of a wind park. Alternatively, detection of a drop in power supply may be done at the local level of a wind turbine.

At block 601, one or more of the power converters may be operated to generate reactive power.

At block 602, one or more of the power converters may be operated to absorb the reactive power generated by the power converters at block 601.

Reactive power is thus circulated among the power converters. As a result, the power losses at the power conversion stage are increase and the electrical power delivered by the generator to the electrical components of the wind turbine is reduced.

In a first aspect, a method for providing electrical power to one or more components of a wind turbine is provided. The method comprises: delivering electrical power to the components of the wind turbine by a wind turbine generator. The method further comprises controlling active electrical power delivered to the components by operating one or more power converters to generate reactive power. Then, one or more further power converters are operated to absorb the reactive power generated by the power converters.

In examples, operating one or more power converters to generate reactive power and absorb reactive power comprises reducing active electrical power delivered to a busbar.

In some examples, the method may be performed in case a drop in the electrical power supplied from the electrical grid is detected.

In examples, the generator is a doubly fed induction generator comprising a rotor and a stator, the wind turbine further comprising a main transformer for connecting the wind turbine generator to a grid, wherein the power converters are arranged between the wind turbine generator and a point of connection to the main transformer, wherein each of the converters comprises a grid side converter electrically coupled to the main transformer and a machine side converter electrically coupled to the rotor of the generator, a stator bus for connecting the stator of the generator and the main transformer, one or more rotor buses for connecting the rotor of the generator and the converters, and one or more line side buses for connecting the converters and a point of connection to a main transformer.

In case the generator is a doubly fed induction generator 70, the wind turbine may comprise a single power converter 73. In this example, operating the wind turbine to generate and absorb reactive power comprises: operating one the machine side converter 76 and grid side converter 77 to generate reactive power such that electrical power delivered by the generator 70 is decreased, and operating the other of the grid side converter 77 and machine side converter 76 to absorb the generated reactive power.

In examples, instead of a doubly fed induction generator, the generator is a synchronous generator 162 e.g. a permanent magnets synchronous generator, the wind turbine further comprising: a main transformer 6 for connecting the wind turbine generator 162 to a grid, wherein the power converters 10, 11 are arranged between the wind turbine generator 162 and a point of connection to the main transformer 6, wherein each of the converters 10, 11 comprises a grid side converter 14 electrically coupled to the main transformer 6 and a machine side converter 13 electrically coupled to the wind turbine generator 162, a first bus for connecting the wind turbine generator 162 and the converters 10, 11 and a second bus for connecting the converters 10, 11 and the main transformer 6.

In some examples, the wind turbine comprises two or more parallel converters 10, 11. In this example, operating the power converters to generate and absorb the reactive power comprises: operating one or more of the power converters 10 to generate reactive power using a grid side converter 14 of the power converters 10 , operating one or more of the other power converters 11 to absorb the generated reactive power generated using the grid side converter of the power converters.

The number of power converters 10, 11 may be an even number, the method further comprising: operating half of the power converters 10 to generate reactive power, and operating the other half of the power converters 11 to absorb reactive power.

In case the wind turbine comprises n parallel power converters, wherein operating the power converters to generate and absorb reactive power comprises: selecting a number of x converters which do not generate or absorb reactive power, and selecting n - x power converters to generate and absorb reactive power.

Moreover, the wind turbine may further comprise a blade pitch drive, the method comprises before delivering electrical power to the electrical components of the wind turbine by the wind turbine generator: adjusting the pitch of the rotor blades such that the rotor shaft starts rotating and adjusting the pitch of the rotor blades for reducing the electrical power delivered by the generator.

In examples, operating one or more of the power converters to generate reactive power comprises: detecting an electrical power delivered to the electrical components comparing the electrical power delivered to the electrical components with a suitable electrical power for the electrical components, and if the delivered electrical power is above the suitable electrical power for the electrical components, operating the power converters to generate and to absorb reactive power such that the power delivered by the generator is decreased.

In examples, operating one or more of the power converters to generate reactive power comprises determining an amount of reactive power to be generated by the power converters in accordance with one or more measured variables of the generator e.g. electric power received by the electrical components and / or the electrical power generated by the generator.

In an aspect, a method for providing electrical power to one or more components of a wind turbine is provided. The wind turbine comprises a generator, a rotor hub with a plurality of rotor blades, the hub being configured to drive a rotor of the wind turbine generator. The wind turbine further comprises a main transformer for connecting the wind turbine generator to a grid, and one or more power converters arranged between the generator and a point of connection to the main transformer, wherein each of the converters comprises a grid side converter electrically coupled to the transformer and a machine side converter electrically coupled to the generator. The method comprises: delivering electrical power to the electrical components of the wind turbine by the wind turbine generator. The method further comprises operating one or more of the power converters to generate reactive power. Then, one or more of the other power converters are operated to absorb the reactive power generated by the power converters such that the active electrical power output to a busbar is decreased. This is illustrated in figure 6.

In some examples, the method may be performed in case a drop in the electrical power supplied from the electrical grid is detected (and before delivering electrical power to the electrical components of the wind turbine by the wind turbine generator).

In examples, the generator is a doubly fed induction generator 70 comprising a rotor 130 and a stator 140. The wind turbine further comprises a stator bus 72 for connecting the stator of the generator and the main transformer, one or more rotor buses 74 for connecting the rotor of the generator and the converters 73, wherein each of the converters 73 comprises a machine side converter 76 electrically coupled to the rotor 130 of the generator, and one or more line side buses 78 for connecting the converters 73 and a point of connection to the main transformer 79. Reference may be had to figure 5.

In case the generator is a doubly fed induction generator 70, the wind turbine may comprise a single power converter 73. In this example, operating the wind turbine to generate and absorb reactive power comprises: operating one of the machine side converter 76 and the grid side converter 77 to generate reactive power such that electrical power delivered by the generator 70 is decreased, and operating the other of the grid side converter 77 or the machine side converter 76 to absorb the generated reactive power.

In some other examples, instead of a doubly fed induction generator, the generator is a synchronous generator 162 e.g. a permanent magnets synchronous generator, the wind turbine further comprising: a first bus for connecting the generator and the converters and a second bus for connecting the converters and the transformer 6. Reference may be had to figures 3 and 4.

In a further aspect, a method for providing electrical power to one or more components of a wind turbine is provided. The method comprises: delivering electrical power to the components of the wind turbine by a wind turbine generator. The method further comprises operating one or more of the power converters to generate reactive power. Then, one or more further power converters are operated to absorb the reactive power generated by the power converters, wherein an amount of reactive power absorbed by the power converters is substantially similar to the amount of reactive power generated by the power converters.

In examples, the generator is a doubly fed induction generator comprising a rotor and a stator, the wind turbine further comprising a main transformer for connecting the wind turbine generator to a grid, wherein the power converters are arranged between the wind turbine generator and a point of connection to the main transformer, wherein each of the converters comprises a grid side converter electrically coupled to the main transformer and a machine side converter electrically coupled to the rotor of the generator, a stator bus for connecting the stator of the generator and the main transformer, one or more rotor buses for connecting the rotor of the generator and the converters, and one or more line side buses for connecting the converters and a point of connection to a main transformer.

In examples, the generator is a synchronous generator, the wind turbine further comprising: a main transformer for connecting the wind turbine generator to a grid, wherein the power converters are arranged between the wind turbine generator and a point of connection to the main transformer, wherein each of the converters comprises a grid side converter electrically coupled to the main transformer and a machine side converter electrically coupled to the wind turbine generator, a first bus for connecting the wind turbine generator and the converters and a second bus for connecting the converters and the main transformer.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art.

If reference signs related to drawings are placed in parentheses in a claim, they are solely for attempting to increase the intelligibility of the claim, and shall not be construed as limiting the scope of the claim.

## Claims

1. A method for providing electrical power to one or more components (8) of a wind turbine, the wind turbine comprising a wind turbine generator (70) connected to a grid through a main transformer (79), one or more power converters being arranged between the wind turbine generator (70) and a point of connection to the main transformer (79), wherein each of the power converters comprises a grid side converter electrically coupled to the transformer and a machine side converter electrically coupled to the generator, the method **characterized by**:
detecting a drop in power supply from the grid;
delivering electrical power to the components (8) of the wind turbine by the wind turbine generator (162, 70) of the wind turbine when the drop in power supply from the grid is detected;
controlling active electrical power delivered to the components in case the drop in power supplied from the grid is detected by operating a first of the plurality of converters (10, 11, 73) to increase capacitive reactive power by an amount, and by operating a second of the plurality of converters (10, 11, 73) to increase inductive reactive power by substantially the same amount.

2. A method according to claim 1, comprising reducing active electrical power delivered to a busbar.

3. A method according to any of claims 1 - 2, wherein the generator is a doubly fed induction generator (70) comprising a rotor (130) and a stator (140),
and each of the converters (73) comprises a grid side converter (77) electrically coupled to the main transformer and a machine side converter (76) electrically coupled to the rotor (130) of the generator,
a stator bus (72) for connecting the stator (140) of the generator (70) and the main transformer (79),
one or more rotor buses (74) for connecting the rotor (130) of the generator (70) and the converters (73), and
one or more line side buses (78) for connecting the converters (73) and a point of connection to the main transformer (79).

4. A method according to claim 3, wherein the wind turbine comprises a single power converter (73), wherein operating the power converter to generate and absorb reactive power comprises:
operating one of the machine side converter (76) and grid side converter (77) to increase capacitive reactive power such that electrical power delivered by the generator (70) is decreased, and
operating the other of the grid side converter (77) and the machine side converter (76) to increase the inductive reactive power.

5. A method according to any of claims 1 - 2, wherein the generator is a synchronous generator (162), and wherein each of the converters (10, 11) comprises a grid side converter (14) electrically coupled to the main transformer (6) and a machine side converter (13) electrically coupled to the wind turbine generator (162),
a first bus for connecting the wind turbine generator (162) and the converters (10, 11) and a second bus for connecting the converters (10, 11) and the main transformer (6).

6. A method according to claim 5, wherein the generator is a permanent magnets synchronous generator.

7. A method according to any of claims 1 - 3 or 5 - 6, wherein the wind turbine comprises two or more parallel power converters (10, 11).

8. A method according to claim 7, wherein
a grid side converter of the parallel power converters increases capacitive reactive power, and
another grid side converter of the parallel power converters increases inductive reactive power.

9. A method according to any of claims 7 - 8, wherein the number of power converters (10, 11) is an even number, the method further comprising:
operating half of the power converters to increase capacitive reactive power, and
operating the other half of the power converters to increase inductive reactive power.

10. A method according to any of claims 1 - 3 or 5 - 8, wherein the wind turbine comprises n parallel power converters, and further comprising:
operating a number of x converters to not increase or decrease capacitive reactive power, and
operating n - x power converters to increase or decrease reactive power.

11. A method according to any of claims 1 - 10, wherein the wind turbine further comprises a blade pitch drive, the method comprises before delivering electrical power to the electrical components of the wind turbine by the wind turbine generator:
adjusting the pitch of the rotor blades such that the rotor shaft starts rotating.

12. A method according to claim 11, the method further comprising:
adjusting the pitch of the rotor blades for reducing the electrical power delivered by the generator.

13. A method according to any of claims 1 - 12, comprising:
detecting an electrical power delivered to the electrical components (8),
comparing the electrical power delivered to the electrical components (8) with a suitable electrical power for the electrical components, and
if the delivered electrical power is above the suitable electrical power for the electrical components (8), operating a first of a plurality converters (10, 11, 73) to increase capacitive reactive power, and operating a second of the plurality of converters (10, 11, 73) to increase inductive reactive power such that the power delivered by the generator (10, 11, 73) is decreased.

14. A method according to claim 1 - 13, further comprising:
determining an amount of reactive power to be generated by the converters (10, 11, 73) in accordance with one or more measured variables of the generator.

## Patentansprüche

1. Verfahren zur Bereitstellung von elektrischer Energie für eine oder mehrere Komponenten (8) einer Windturbine, wobei die Windturbine einen Windturbinengenerator (70) umfasst, der über einen Haupttransformator (79) mit einem Netz verbunden ist, wobei ein oder mehrere Leistungsumrichter zwischen dem Windturbinengenerator (70) und einem Verbindungspunkt mit dem Haupttransformator (79) angeordnet sind, wobei jeder der Leistungsumrichter einen netzseitigen Umrichter, der elektrisch mit dem Transformator gekoppelt ist, und einen maschinenseitigen Umrichter umfasst, der elektrisch mit dem Generator gekoppelt ist, wobei das Verfahren **gekennzeichnet ist durch**:
das Erkennen eines Abfalls der Stromversorgung aus dem Netz;
Liefern von elektrischer Energie an die Komponenten (8) der Windturbine **durch** den Windturbinengenerator (162, 70) der Windturbine, wenn der Abfall der Energieversorgung aus dem Netz erkannt wird;
Steuern der an die Komponenten gelieferten elektrischen Wirkleistung für den Fall, dass der Abfall der vom Netz gelieferten Leistung erkannt wird, **durch** Betreiben eines ersten der mehreren Wandler (10, 11, 73), um die kapazitive Blindleistung um einen Betrag zu erhöhen, und **durch** Betreiben eines zweiten der mehreren Wandler (10, 11, 73), um die induktive Blindleistung um im Wesentlichen den gleichen Betrag zu erhöhen.

2. Verfahren nach Anspruch 1, bei dem die an eine Sammelschiene gelieferte elektrische Wirkleistung reduziert wird.

3. Verfahren nach einem der Ansprüche 1 bis 2, wobei der Generator ein doppelt gespeister Induktionsgenerator (70) mit einem Rotor (130) und einem Stator (140) ist, und jeder der Umrichter (73) einen netzseitigen Umrichter (77), der elektrisch mit dem Haupttransformator gekoppelt ist, und einen maschinenseitigen Umrichter (76) umfasst, der elektrisch mit dem Rotor (130) des Generators gekoppelt ist,
eine Statorsammelschiene (72) zur Verbindung des Stators (140) des Generators (70) und des Haupttransformators (79),
eine oder mehrere Rotorsammelschienen (74) zum Verbinden des Rotors (130) des Generators (70) und der Umrichter (73), und
eine oder mehrere netzseitige Sammelschienen (78) zum Verbinden der Umrichter (73) und eines Verbindungspunktes mit dem Haupttransformator (79).

4. Verfahren nach Anspruch 3, wobei die Windturbine einen einzelnen Stromrichter (73) umfasst, wobei das Betreiben des Stromrichters zum Erzeugen und Absorbieren von Blindleistung umfasst:
das Betreiben des maschinenseitigen Stromrichters (76) oder des netzseitigen Umrichters (77), um die kapazitive Blindleistung zu erhöhen, so dass die vom Generator (70) gelieferte elektrische Leistung verringert wird, und
das Betreiben des anderen von netzseitigem Umrichter (77) und maschinenseitigem Umrichter (76), um die induktive Blindleistung zu erhöhen.

5. Verfahren nach einem der Ansprüche 1 bis 2, wobei der Generator ein Synchrongenerator (162) ist und wobei jeder der Umrichter (10, 11) einen netzseitigen Umrichter (14), der elektrisch mit dem Haupttransformator (6) gekoppelt ist, und einen maschinenseitigen Umrichter (13), der elektrisch mit dem Windturbinengenerator (162) gekoppelt ist, umfasst,
eine erste Sammelschiene zur Verbindung des Windturbinengenerators (162) und der Umrichter (10, 11) und eine zweite Sammelschiene zur Verbindung der Umrichter (10,11) und des Haupttransformators (6).

6. Verfahren nach Anspruch 5, wobei der Generator ein Synchrongenerator mit Permanentmagneten ist.

7. Verfahren nach einem der Ansprüche 1-3 oder 5 - 6, wobei die Windturbine zwei oder mehr parallele Leistungsumrichter (10, 11) umfasst.

8. Verfahren nach Anspruch 7, wobei
ein netzseitiger Umrichter der parallelen Stromrichter die kapazitive Blindleistung erhöht, und
ein anderer netzseitiger Umrichter der parallelen Stromrichter die induktive Blindleistung erhöht.

9. Verfahren nach einem der Ansprüche 7 bis 8, wobei die Anzahl der Leistungsumrichter (10,11) eine gerade Zahl ist, wobei das Verfahren ferner umfasst:
Betreiben der Hälfte der Leistungsumrichter, um die kapazitive Blindleistung zu erhöhen, und
Betreiben der anderen Hälfte der Leistungsumrichter zur Erhöhung der induktiven Blindleistung.

10. Verfahren nach einem der Ansprüche 1 - 3 oder 5 - 8, wobei die Windturbine n parallele Leistungsumrichter umfasst, und ferner umfassend:
das Betreiben einer Anzahl von x Umrichtern, um die kapazitive Blindleistung nicht zu erhöhen oder zu verringern, und
Betreiben von n - x Umrichtern, um die Blindleistung zu erhöhen oder zu verringern.

11. Verfahren nach einem der Ansprüche 1 bis 10, wobei die Windturbine ferner einen Rotorblattverstellantrieb umfasst, wobei das Verfahren vor der Lieferung von elektrischem Strom an die elektrischen Komponenten der Windturbine durch den Windturbinengenerator umfasst:
das Einstellen des Anstellwinkels der Rotorblätter, so dass sich die Rotorwelle zu drehen beginnt.

12. Verfahren nach Anspruch 11, wobei das Verfahren ferner umfasst:
Einstellen des Anstellwinkels der Rotorblätter zur Reduzierung der vom Generator gelieferten elektrischen Leistung.

13. Verfahren nach einem der Ansprüche 1 bis 12, umfassend:
Erfassen einer elektrischen Leistung, die an die elektrischen Komponenten (8) abgegeben wird,
Vergleichen der an die elektrischen Komponenten (8) gelieferten elektrischen Leistung mit einer für die elektrischen Komponenten geeigneten elektrischen Leistung, und
wenn die gelieferte elektrische Leistung über der geeigneten elektrischen Leistung für die elektrischen Komponenten (8) liegt, Betreiben eines ersten einer Mehrzahl von Leistungsumrichtern (10, 11, 73), um die kapazitive Blindleistung zu erhöhen, und Betreiben eines zweiten der Mehrzahl von Umrichtern (10, 11, 73), um die induktive Blindleistung zu erhöhen, so dass die vom Generator (10, 11, 73) gelieferte Leistung verringert wird.

14. Verfahren nach einem der Ansprüche 1 bis 13, ferner umfassend:
Bestimmen einer von den Stromrichtern (10, 11, 73) zu erzeugenden Blindleistungsmenge in Abhängigkeit von einer oder mehreren gemessenen Variablen des Generators.

## Revendications

1. Procédé pour fournir de l'énergie électrique à un ou plusieurs composants (8) d'une éolienne, l'éolienne comprenant un générateur d'éolienne (70) connecté à un réseau par l'intermédiaire d'un transformateur principal (79), un ou plusieurs convertisseurs de puissance étant disposés entre le générateur d'éolienne (70) et un point de connexion au transformateur principal (79), dans lequel chacun des convertisseurs de puissance comprend un convertisseur côté réseau couplé électriquement au transformateur et un convertisseur côté machine couplé électriquement au générateur, le procédé étant **caractérisé par** :
détecter d'une chute de l'alimentation électrique en provenance du réseau ;
fournir énergie électrique aux composants (8) de l'éolienne par le générateur d'éolienne (162, 70) lorsque la chute de l'alimentation électrique du réseau est détectée ;
commander la puissance électrique active délivrée aux composants dans le cas où la chute de l'alimentation en énergie fournie par le réseau est détectée en faisant fonctionner un premier de la pluralité de convertisseurs (10, 11, 73) pour augmenter la puissance réactive capacitive d'une certaine quantité, et en faisant fonctionner un second de la pluralité de convertisseurs (10, 11, 73) pour augmenter la puissance réactive inductive sensiblement de la même quantité.

2. Procédé selon la revendication 1, comprenant la réduction de la puissance électrique active délivrée à un jeu de barres.

3. Procédé selon l'une quelconque des revendications 1 - 2, dans lequel le générateur est un générateur à induction à double alimentation (70) comprenant un rotor (130) et un stator (140),
et chacun des convertisseurs (73) comprend un convertisseur côté réseau (77) couplé électriquement au transformateur principal et un convertisseur côté machine (76) couplé électriquement au rotor (130) du générateur,
un jeu de barres de stator (72) pour connecter le stator (140) du générateur (70) et le transformateur principal (79),
un ou plusieurs jeux de barres de rotor (74) pour connecter le rotor (130) du générateur (70) et les convertisseurs (73), et
un ou plusieurs jeux de barres côté ligne (78) pour connecter les convertisseurs (73) et un point de connexion au transformateur principal (79).

4. Procédé selon la revendication 3, dans lequel l'éolienne comprend un seul convertisseur de puissance (73), dans lequel le fonctionnement du convertisseur de puissance pour générer et absorber la puissance réactive comprend :
faire fonctionner l'un du convertisseur côté machine (76) et du convertisseur côté réseau (77) pour augmenter la puissance réactive capacitive de sorte que la puissance électrique délivrée par le générateur (70) soit diminuée, et
faire fonctionner l'autre du convertisseur côté réseau (77) et du convertisseur côté machine (76) pour augmenter la puissance réactive inductive.

5. Procédé selon l'une quelconque des revendications 1 - 2, dans lequel le générateur est un générateur synchrone (162), et dans lequel chacun des convertisseurs (10, 11) comprend un convertisseur côté réseau (14) couplé électriquement au transformateur principal (6) et un convertisseur côté machine (13) couplé électriquement au générateur d'éolienne (162),
un premier jeu de barres pour connecter le générateur de turbine éolienne (162) et les convertisseurs (10, 11) et un second jeu de barres pour connecter les convertisseurs (10,11) et le transformateur principal (6).

6. Procédé selon la revendication 5, dans lequel le générateur est un générateur synchrone à aimants permanents.

7. Procédé selon l'une quelconque des revendications 1 - 3 ou 5 - 6, dans lequel l'éolienne comprend deux ou plusieurs convertisseurs de puissance parallèles (10, 11).

8. Procédé selon la revendication 7, dans lequel
un convertisseur côté réseau des convertisseurs de puissance parallèles augmente la puissance réactive capacitive, et
un autre convertisseur côté réseau des convertisseurs de puissance parallèles augmente la puissance réactive inductive.

9. Procédé selon l'une quelconque des revendications 7 - 8, dans lequel le nombre de convertisseurs de puissance (10, 11) est un nombre pair, le procédé comprenant en outre :
faire fonctionner la moitié des convertisseurs de puissance pour augmenter la puissance réactive capacitive, et
faire fonctionner l'autre moitié des convertisseurs de puissance pour augmenter la puissance réactive inductive.

10. Procédé selon l'une quelconque des revendications 1 - 3 ou 5 - 8, dans lequel l'éolienne comprend n convertisseurs de puissance parallèles, et comprenant en outre :
faire fonctionner un nombre x de convertisseurs pour ne pas augmenter ou diminuer la puissance réactive capacitive, et
faire fonctionner n - x convertisseurs de puissance pour augmenter ou diminuer la puissance réactive.

11. Procédé selon l'une quelconque des revendications 1 à 10, dans lequel l'éolienne comprend en outre un dispositif d'entraînement du pas des pales, le procédé comprenant, avant de délivrer de l'énergie électrique aux composants électriques de l'éolienne par le générateur de l'éolienne, les opérations suivantes
régler du pas des pales du rotor de telle sorte que l'arbre du rotor commence à tourner.

12. Procédé selon la revendication 11, le procédé comprenant en outre :
régler du pas des pales du rotor pour réduire la puissance électrique délivrée par le générateur.

13. Procédé selon l'une quelconque des revendications 1 - 12, comprenant :
détecter d'une puissance électrique délivrée aux composants électriques (8),
comparer la puissance électrique délivrée aux composants électriques (8) avec une puissance électrique appropriée pour les composants électriques, et
si la puissance électrique délivrée est supérieure à la puissance électrique appropriée pour les composants électriques (8), faire fonctionner un premier d'une pluralité de convertisseurs de puissance (10, 11, 73) pour augmenter la puissance réactive capacitive, et faire fonctionner un deuxième de la pluralité de convertisseurs (10, 11, 73) pour augmenter la puissance réactive inductive de sorte que la puissance délivrée par le générateur (10, 11, 73) est diminuée.

14. Procédé selon la revendication 1 - 13, comprenant en outre :
déterminer une quantité de puissance réactive à générer par les convertisseurs de puissance (10, 11, 73) en fonction d'une ou plusieurs variables mesurées du générateur.
